# EUROPÄISCHE PATENTSCHRIFT

(11) **EP 1 399 797 B1**
(45) Veröffentlichungstag und Bekanntmachung des Hinweises auf die Patenterteilung: **23.01.2008**
(21) Anmeldenummer: 02740708.9
(22) Anmeldetag: 11.06.2002
(51) Int. Cl.: G06F 21/00

(54) **STEUEREINHEIT**
CONTROL UNIT
UNITE DE COMMANDE

(30) Priorität: 12.06.2001 DE 10128305
(43) Veröffentlichungstag der Anmeldung: 24.03.2004
(73) Patentinhaber: Giesecke & Devrient GmbH, 81677 München (DE); Secartis AG, 85630 Grasbrunn (DE)
(72) Erfinder: SCHWAN, Olaf, D-80804 München (DE); UEBELACKER, Hubert, D-81737 München (DE); LINDLBAUER, Marc, D-80335 München (DE)
(74) Vertreter: Höhfeld, Jochen
(86) Internationale Anmeldenummer: PCT/EP2002/006399
(87) Internationale Veröffentlichungsnummer: WO 2003/001348

(56) Entgegenhaltungen:
- EP-A- 0 455 174
- DE-A- 19 512 266
- US-A- 5 623 637

## Beschreibung

Die Erfindung betrifft eine Steuereinheit für technische Anlagen, Geräte und/oder Maschinen mit einem Mikroprozessor, mit einem programmierbaren Speicher, mit einem Gehäuse und mit zumindest einer aus dem Gehäuse herausführenden Datenleitung zur Verbindung mit einer externen Einrichtung zum Schreiben von Daten in den programmierbaren Speicher.

Derartige auf Mikrocontrollern basierende Steuereinheiten werden mittlerweile in sehr vielen Maschinen und Geräten, beispielsweise im Kraftfahrzeug oder in der Consumer-Elektronik etc., eingesetzt. Das vom Mikroprozessor benötigte Steuerungsprogramm ist hierbei üblicherweise in einem programmierbaren Speicher hinterlegt. In vielen Fällen handelt es sich hierbei zumindest teilweise um einen frei programmierbaren, wieder löschbaren und überschreibbaren Speicher. Die Steuereinheit kann dann jederzeit kunden- und anwendungsspezifisch angepasst werden, indem die hierfür benötigten Daten und gegebenenfalls auch komplette Programmabläufe geändert werden. Diese nachträgliche Änderung erlaubt insbesondere auch eine spätere Verbesserung oder Aktualisierung des Steuerungsprogramms. Insbesondere ist es auf diese Weise möglich, über Veränderungen der Steuerungssoftware beispielsweise auch den Funktions- und/oder den Leistungsumfang der Steuereinheit und damit der gesamten technischen Anlagen des Geräts oder der Maschine nachträglich zu modifizieren. Die Umprogrammierung erfolgt üblicherweise dadurch, dass eine externe Einrichtung an eine aus dem Gehäuse herausführende Datenleitung angeschlossen wird und über die Datenleitung dann die erforderlichen Daten in den programmierbaren Speicher geschrieben werden. Bei der externen Einrichtung handelt es sich oft um ein spezielles Gerät zur Programmierung der jeweiligen Steuereinrichtung. Es kann sich aber auch um einen handelsüblichen Com-Die Ergänzung der Beschreibungseinleitung ist in der ursprünglichen Beschreibung auf S. 2, Z.19 einzufügen.

US 5,623,637 offenbart eine tragbare Speicherkarte, die eine integrierte Schaltung für Smartkarten enthält, um ein Paßwort abzuspeichern, und eine Logikschaltung, um einen Zugriff auf der Speicherkarte abgespeicherte Information zu verhindern, wenn der Benutzer eines Host-Computers, der mit der Speicherkarte verbunden ist, ein gültiges Paßwort angeben kann. Die puter handeln, der mit einer speziellen Software zur Programmierung der Steuereinheit versehen ist. Bei den Datenleitungen kann es sich entweder um extra zur Programmierung vorgesehene Datenleitungen handeln, welche einen Schreibzugriff auf den programmierbaren Speicher erlauben. Es kann sich hierbei aber auch um Datenleitungen handeln, die auch zur Steuerung der technischen Anlage und/oder Maschine von der Steuereinheit genutzt werden, d.h. um Datenleitungen, die eine doppelte Funktion haben.

Ein Nachteil einer späteren Änderungsmöglichkeit der Steuersoftware liegt darin, dass unautorisierte Personen diese Möglichkeit missbrauchen können und beispielsweise unerlaubt den Funktions- und/oder Leistungsumfang der Steuereinheit nachträglich modifizieren und damit die gesamte technische Anlage bzw. Maschine "tunen". Dies hat für die Hersteller zum einen den Nachteil, dass sie durch tuning-induzierte Schäden in der Garantiezeit und damit verbundene Kosten geschädigt werden könnten. Zusätzlich können nachträglich die Produktdifferenzierungsmerkmale durch unautorisierte Personen soweit verändert werden, dass Markenpositionierung und Markenpolitik des jeweiligen Herstellers nachhaltig gestört werden.

DE 19512 266 C2 offenbart ein Diebstahlschutzsystem für Fahrzeuge, mit einem Funkempfänger, der sich in einem ersten Gehäuse befindet, das im Fahrzeug angebracht ist, dadurch gekennzeichnet, daß das erste Gehäuse einen für die Fahrzeugfunktion wesentlichen Teil einer elektronischen Schaltung vollständig umgibt und eine Wandung aus einem elektrisch isolierenden Material aufweist, durch die hindurch eine Vielzahl von elektrischen Leitungen, die mit dem Schaltungsteil verbunden sind, an die Außenseite des Gehäuses verlaufen und und in die eine Vielzahl von feinen Drähten eingebettet sind, die interne Leitungsverbindungen des Schaltungsteils bilden, um die elektronische Schaltung vor Manipulation zu schützen, daß ein zweites Gehäuse im Fahrzeug angebracht ist, das einen Funksender enthält, der auf die gleiche Weise wie das erste Gehäuse vor Manipulation geschützt ist und der im Betrieb des Fahrzeuges ein Funksignal an den Funkempfänger in dem ersten Gehäuse sendet, und daß die elektronische Schaltung den Betrieb einstellt, wenn entweder keine Signale von dem Funksender empfangen werden oder ein besonderes Signal von außerhalb des Fahrzeugs empfangen wird.

Integrierte Schaltung kann auch benutzt werden, um öffentliche und private Schlüsselwerte abzuspeichern, die benutzt werden, um Daten zu ver- und entschlüsseln, die auf der Karte oder woanders auf dem Host-Computer abgespeichert sind, oder die mit einem anderen Computer ausgetauscht werden.

Es ist Aufgabe der vorliegenden Erfindung, eine Steuereinheit der eingangs genannten Art derart weiterzuentwickeln, dass sie von autorisierten Instanzen jederzeit modifiziert werden kann, wobei gleichzeitig ein guter Manipulationsschutz gegen unautorisierte Veränderungen gegeben ist.

Diese Aufgabe wird durch eine Steuereinheit gemäß Anspruch 1 gelöst. Die abhängigen Ansprüche enthalten besonders vorteilhafte Ausgestaltungen und Weiterbildungen der Erfindung.

Die erfindungsgemäße Lösung beruht hierbei auf der Kombination von zwei Schutzkomponenten.

Zum einen wird die Steuereinheit durch das Gehäuse so gekapselt dass ein wie auch immer geartetes Öffnen der Steuereinheit, beispielsweise durch Aufschrauben oder Auffräsen, weitgehend dadurch verhindert wird, dass jede Öffnung der Gehäusekapselung automatisch die Zerstörung der Funktionsfähigkeit der Steuereinheit nach sich zieht. Dies ist beispielsweise durch entsprechende Klebetechniken möglich. Es kann sich hierbei sowohl um eine Zerstörung von wesentlichen Hardwarekomponenten als auch um eine Löschung von zumindest für die Funktionsfähigkeit wichtigen Softwareteilen handeln. Es ist dann nicht mehr möglich, die Einheit zu öffnen und entsprechende Speicherbausteine herauszulöten oder Codes zu analysieren, um innerhalb der Steuereinheit vorhandene Sicherheitsmaßnahmen zu analysieren, offenzulegen oder zu umgehen und anschließend die Steuereinheit wieder zu verschließen und in der modifizierten Form weiterzuverwenden. Ein "Tunen" der Steuereinheit ist dann allenfalls noch über die Datenleitungen möglich.

Um dies zu verhindern, weist die Steuereinheit zum zweiten eine Kontrolleinrichtung auf, welche Schreibzugriffe, bei denen Daten über die Datenleitungen in den programmierbaren Speicher geschrieben werden, bezüglich ihrer Berechtigung überprüft. Das heißt, jeder Prozess, der von außen schreibend und/oder lesend über die Datenleitungen auf Daten der Steuereinheit über die Datenleitungen zugreifen möchte, muss sich einer Berechtigungskontrolle durch einen solchen "Torwächter-Prozess" unterziehen. Nur bei einer erfolgreichen Überprüfung der Berechtigung wird das Schreiben/Lesen der Daten in bzw. aus dem programmierbaren Speicher veranlasst, d.h. die Kontrolleinrichtung lässt das Einschreiben und/oder Auslesen der Daten zu oder führt es selbst durch.

Da auf diese Weise alle Daten kanalisiert und bezüglich ihrer Authentizität überprüft werden, ist ein unerlaubtes Tuning über die Datenleitungen nicht mehr möglich. Da das Gehäuse entsprechend physisch gekapselt ist, kann dieser Prozess auch nicht unterlaufen werden.

Eine solche Kontrolleinrichtung wird vorzugsweise in Form eines Softwareprozesses innerhalb des Mikroprozessors und in dem programmierbaren Speicher selbst integriert. Alternativ ist es aber auch möglich, ein separates Sicherheitsmodul mit einer solchen Kontrolleinrichtung unabhängig vom Mikroprozessor und dem programmierbaren Speicher im Gehäuse zu plazieren und an die Datenleitungen wie eine Art Filter anzuschließen.

Zur Durchführung der Überprüfung der Daten gibt es verschiedene generelle Möglichkeiten.

Eine Möglichkeit besteht darin, einen geheimzuhaltenden Algorithmus oder ein geheimzuhaltendes Schlüsselwort zu verwenden. Dabei wird nur dann ein Schreibzugriff zugelassen, wenn zuvor die Authentizität durch bestimmte Angaben, z.B. durch Eingabe einer PIN, oder durch eine dynamische variable Authentisierung im Rahmen eines "Challenge-Response"-Verfahrens festgestellt wurde. In einem besonders einfachen Fall weist die Kontrolleinrichtung dabei lediglich einen Speicher mit einem geheimen Kontrollwort und eine Vergleichseinrichtung auf. Es wird dann vor jedem Schreibzugriff zur Berechtigungsüberprüfung über eine Datenleitung an die Steuereinrichtung ein Schlüsselwort übermittelt und dieses Schlüsselwort mit dem Kontrollwort verglichen.

Bei einem bevorzugten Ausführungsbeispiel ist die Steuereinheit derart in dem Gehäuse eingeschlossen, dass bei einem Öffnen des Gehäuses Speicherbereiche, welche ein geheimes Kontrollwort und/oder einen geheimen Schlüssel und/oder einen geheimen Verschlüsselungsalgorithmus enthalten, gelöscht und/oder zerstört werden, so dass es nicht mehr möglich ist, nach dem Öffnen des Gehäuses diese Daten bzw. Algorithmen auszulesen. Dies hat den Vorteil, dass beispielsweise für eine ganze Serie von Steuereinheiten dieselben geheimen Schlüssel oder Verfahren eingesetzt werden können, ohne dass die Gefahr besteht, dass eine nicht autorisierte Person eine Steuereinheit dieser Serie öffnet und dabei bewusst die Zerstörung der Funktionsfähigkeit in Kauf nimmt, um so die Kenntnis der geheimen Schlüssel bzw. Verfahren zu erlangen, die dann zum unerlaubten Modifizieren von anderen Steuereinheiten derselben Art verwendet werden können.

Bei einer anderen bevorzugten Alternative werden zur Authentisierung keine geheimen Algorithmen, sondern veröffentlichte bzw. veröffentlichbare kryptographische Verfahren eingesetzt. Der Authentisierungsprozess verläuft dann über den Einsatz dieser Verfahren, so dass die Sicherheit nur mehr ausschließlich von den jeweiligen eingesetzten Schlüsseln abhängig ist. Die Sicherheit des Gesamtsystems, d.h. des Manipulationsschutzes des Steuergeräts, wird damit auf die Sicherheit der Schlüsselmanagementprozesse verteilt. Für eine hinreichend sichere Handhabung dieser Schlüssel existieren genügend allgemein bekannte Verfahren. Die Verwendung solcher veröffentlichbaren kryptographischen Verfahren hat den Vorteil, dass die implementierte Sicherheit, anders als bei geheimen Algorithmen, nicht mehr einfach durch die Kenntnis der Algorithmen umgangen werden kann, wie dies z.B. bei einer trivialen Passworteingabe der Fall ist.

Beispiele für solche veröffentlichten kryptographischen Verfahren sind symmetrische kryptographische Verfahren wie beispielsweise DES, 3-DES oder IDEA sowie asymmetrische kryptographische Verfahren wie beispielsweise das RSA-Verfahren, bei dem der Verschlüsselungsalgorithmus auf der Arithmetik großer Ganzzahlen beruht und die Schlüssel auf der Grundlage von zwei großen Primzahlen erzeugt werden.

Einen besonderen Vorteil bietet die Verwendung einer solchen Steuereinheit beispielsweise zur Steuerung eines Kraftfahrzeugmotors. Bei derartigen Steuergeräten ist es auch aus verkehrssicherheitstechnischen Gründen wichtig, ein unerlaubtes Tunen der Steuerungseinheiten und damit der Motoren zu verhindern. Im Übrigen kann ein unautorisiertes Tunen hier auch zu einer frühzeitigen Beschädigung von Motoren oder Getriebe innerhalb der Garantiezeit führen, was wiederum einen größeren Schaden für den Fahrzeughersteller bedeutet. Andererseits besteht aber auch gerade auf diesem Markt ein besonders großes Interesse der Nutzer, sich durch entsprechendes Tunen eine höhere Leistung des Motors zu verschaffen.

Die Erfindung erlaubt bei größtmöglicher Manipulationssicherheit jederzeit gegen Vorlage und Überprüfung einer Berechtigung, beispielsweise eines elektronischen Zertifikats und/oder eines biometrischen Merkmals etc. eine Veränderung der Programmierung. Somit ist durch eine autorisierte Instanz, wie den Hersteller oder einen lizenzierten Nutzer der Steuereinheit, jederzeit eine Freischaltung, Abänderung oder ein Einspielen von diversen Inhalten wie beispielsweise Stadtplänen, Musikstücken oder dergleichen sowie eine komplette Veränderung des Programmcodes möglich.

Die mögliche Änderung von Daten oder des Programmcodes innerhalb der Steuereinheit durch eine autorisierte Person bei gleichzeitiger sicherer Verhinderung der Manipulation hat auch den Vorteil, dass beispielsweise nur temporäre Veränderungen vorgenommen werden können, die sich nach einer vorgegebenen Zeitspanne, beispielsweise nach Ablauf einer bestimmten Zusatzlizenz, wieder selbsttätig zurücksetzen. Auf diese Weise könnte z.B. zeitlich begrenzt Leistung im Kraftfahrzeug gemietet bzw. nachgeladen werden. Ebenso könnten in Steuerungsgeräten für Navigationssysteme temporär für eine bestimmte Tour geographische Daten über die zu durchfahrenden Regionen, d.h. Stadtpläne oder Landkarten, gemietet werden, deren Daten nach Ablauf eines vorgegebenen Zeitpunkts nach Abschluss der Reise dem Navigationssystem nicht mehr zur Verfügung stehen.

Insbesondere bei Veränderungen beispielsweise der Steuerungssoftware für Kraftfahrzeuge ist es ggf. erforderlich vor Ausführung der Änderungen eine Authorisierung bzw. Freigabe durch eine dritte Stelle, beispielsweise der Kfz-Zulassungsstelle einzuholen. Zu diesem Zweck wird vor oder nach der Berechtigungsüberprüfung durch die Kontrolleinrichtung eine Verbindung zu der externen authorisierenden Stelle initiiert, welche die zu installierende Steuerungssoftware freigibt.

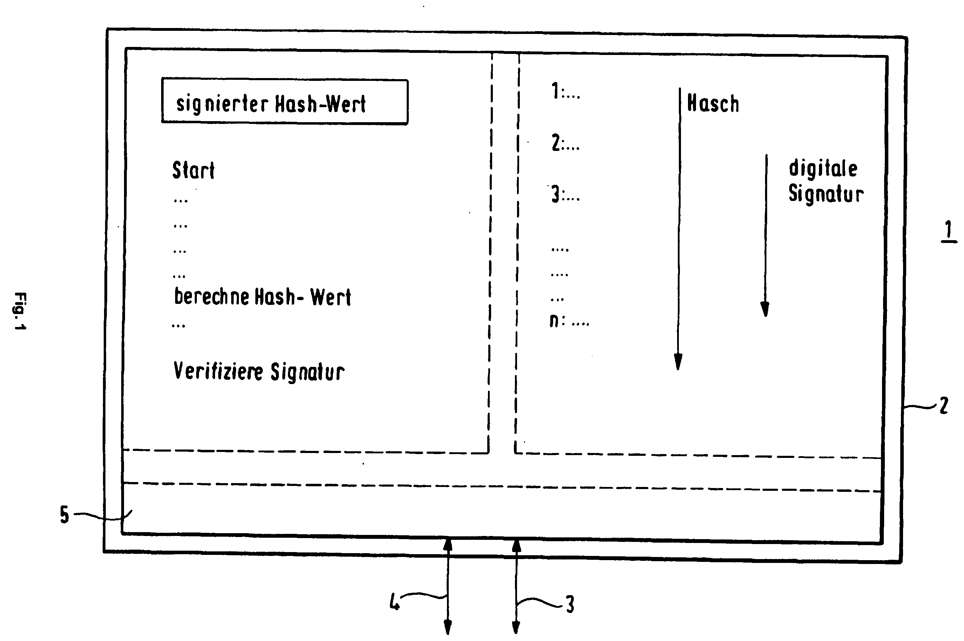

Die Erfindung wird im Folgenden unter Hinweis auf die beigefügte Figur anhand eines Ausführungsbeispiels näher erläutert.

Die einzige Figur zeigt dabei in schematischer Blockdarstellung eine Steuereinheit 1 für einen Kraftfahrzeugmotor (nicht dargestellt).

Die Steuereinheit 1 weist zunächst ein gekapseltes Gehäuse 2 auf, in welchem sich ein Mikroprozessor mit einem programmierbaren Speicher befindet, in dem Programmdaten und Nutzdaten, unter anderem die tuningrelevanten Parameter des Motors wie der Ladedruck, gespeichert sind. Das Gehäuse 2 ist so verschlossen, dass jede Öffnung zu einer irreversiblen Zerstörung der Funktionsfähigkeit der Steuereinheit führt. Über Datenleitungen 3, 4 ist es möglich, auf den programmierbaren Speicher zuzugreifen und die dortigen Programme bzw. Daten zu überschreiben.

Außerdem weist die Steuereinheit 1 eine Kontrolleinrichtung 5 auf, welche als "Torwächter" alle über die Datenleitungen 3, 4 hereinkommenden Daten überprüft und somit jeden Schreibzugriff auf seine Authentizität hin kontrolliert.

Die Kontrolleinrichtung ist in der Figur als ein Block innerhalb der Steuereinheit dargestellt. Die Kontrolleinrichtung 5 ist in der Realität als softwaremäßiger Prozess innerhalb des Mikroprozessors in dem programmierbaren Speicher implementiert. Der Mikroprozessor und der programmierbare Speicher selbst sind in der Figur nicht dargestellt.

In dem dargestellten Ausführungsbeispiel arbeitet die Kontrolleinrichtung 5 mittels einer digitalen Signatur, bei der zunächst über den gesamten Datenstring, der in den Speicher geschrieben werden soll, ein Hash-Wert berechnet wird. Dieser Hash-Wert wird vor der Übermittlung über eine der Datenleitungen 3, 4 mit einem beliebigen, vorzugsweise asymmetrischen Krypto-Algorithmus, hier einem RSA-Verfahren, verschlüsselt. Das Ergebnis dieser Berechnung wird als "Unterschrift" der eigentlichen Nachricht beigefügt, d.h. an den Datenstring angehängt.

Innerhalb der Steuereinheit 1 wird dann von der Kontrolleinrichtung 5 veranlasst, dass über den eigentlichen Datenstring ein Hash-Wert mit dem gleichen Hash-Algorithmus wie auf der Seite des schreibenden Geräts komprimiert wird. Die angehängte digitale Signatur wird mit dem öffentlichen Schlüssel des RSA-Algorithmus entschlüsselt und der bei der Entschlüsselung enthaltene angefügte Hash-Wert der Signatur mit dem innerhalb der Steuereinheit berechneten Hash-Wert verglichen. Sind beide Werte gleich, wurde die Nachricht auf ihrem Übertragungsweg nicht verändert und von einem Gerät, welches im Besitz des richtigen geheimen Schlüssels ist, erzeugt. Die Signatur wurde damit verifiziert und die Daten authentisiert. Falls die beiden Werte nicht übereinstimmen, wurde entweder die Nachricht oder die Signatur während der Übertragung verändert. Damit ist die Authentizität nicht mehr gegeben, und der Inhalt der Nachricht kann nicht mehr als unverändert oder von einer authentisierten Person gesendet angenommen werden. Der gesendete Datenstring wird dementsprechend von der Kontrolleinrichtung nicht akzeptiert und in der Folge nicht - wie vom Benutzer der Einrichtung zur Programmierung der Steuereinheit 1 gewünscht - in den Speicher geschrieben. Dieser Kontrollprozess ist als Programmcode links oben in der Kontrolleinrichtung 5 dargestellt. Der Datenstring selbst sowie die Bildung des Hash-Werts und der Signatur sind rechts oben innerhalb der Kontrolleinrichtung 5 dargestellt

Da wegen der Gehäusekapselung eine Umgehung der digitalen Signatur nicht möglich ist, indem eine unbefugte Person das Gehäuse öffnet und die gewünschten Daten direkt in die jeweiligen Stellen des Speichers einschreibt, wird der Manipulationsschutz an und in der Steuereinheit effektiv durch die Erfindung erhöht. Dadurch entstehen den betroffenen Unternehmen keine unerwünschten Garantieansprüche. Die Markenstrategie der jeweiligen Unternehmen wird nicht mehr unterlaufen. Zudem wird die Lebensdauer der von der Steuereinheit angesteuerten technischen Anlagen und/oder Geräte oder Maschinen im Verhältnis zu den unerlaubt veränderten Einrichtungen erhöht. Darüber hinaus sind nachträgliche Änderungen oder Erweiterungen im Verhalten der Steuereinheit dauerhaft oder auch nur temporär jederzeit möglich, so dass eine flexible und dynamische Anpassung an sich ändernde Anforderungen von Technik, Märkten und Kunden gewährleistet werden kann.

## Patentansprüche

1. Steuereinheit (1) mit einem Mikroprozessor, mit einem programmierbaren Speicher, mit einem Gehäuse (2) und mit zumindest einer aus dem Gehäuse (2) herausführenden Datenleitung (3, 4) zur Verbindung mit einer externen Einrichtung zum Schreiben und/oder Lesen von Daten in bzw. aus dem programmierbaren Speicher,
wobei die Steuereinheit (1) derart in dem Gehäuse (2) eingeschlossen ist, dass bei einem Öffnen des Gehäuses (2) die Funktionsfähigkeit der Steuereinheit (1) zumindest teilweise zerstört wird, **dadurch gekennzeichnet, dass** die Steuereinheit (1) eine Kontrolleinrichtung (5) aufweist, welche einen Schreib- und/oder Lesezugriff, bei dem Daten über die Datenleitung (3, 4) in den programmierbaren Speicher geschrieben oder aus diesem gelesen werden, bezüglich einer Berechtigung überprüft und nur bei erfolgreicher Überprüfung der Berechtigung das Schreiben/ Lesen der Daten in bzw. aus dem programmierbaren Speicher veranlasst und,
**dass** die Kontrolleinrichtung (5) Mittel zur Aufnahme einer Verbindung zu einer dritten Stelle enthält und ein Schreib-/Lesezugriff nur zugelassen ist, wenn eine Freigabe durch diese dritte Stelle erfolgt ist.

2. Steuereinheit nach Anspruch 1, **dadurch gekennzeichnet, dass** die Kontrolleinrichtung einen Speicher mit einem geheimen Kontrollwort und eine Vergleichseinrichtung umfasst, um ein vor einem Schreibzugriff über eine Datenleitung an die Steuereinrichtung übermitteltes Schlüsselwort mit dem Kontrollwort zur Berechtigungsüberprüfung zu vergleichen.

3. Steuereinheit nach Anspruch 1 oder 2, **dadurch gekennzeichnet, dass** die Kontrolleinrichtung Mittel zur Durchführung eines Challenge-Response-Verfahrens zur Berechtigungsüberprüfung umfasst.

4. Steuereinheit nach einem der Ansprüche 1 bis 5, **dadurch gekennzeichnet, dass** die Kontrolleinrichtung Mittel zur Verschlüsselung und/oder Entschlüsselung von Daten umfasst.

5. Steuereinheit nach einem der Ansprüche 1 bis 3, **dadurch gekennzeichnet, dass** die Kontrolleinrichtung (5) Mittel zur Überprüfung einer digitalen Signatur der über die Datenleitung (3, 4) übermittelten Daten umfasst.

6. Steuereinheit nach einem der Ansprüche 1 bis 5, **dadurch gekennzeichnet, dass** die Steuereinheit derart in dem Gehäuse eingeschlossen ist, dass bei einem Öffnen des Gehäuses Speicherbereiche, welche ein geheimes Kontrollwort und/ oder einen geheimen Schlüssel und/ oder einen geheimen Verschlüsselungsalgorithmus enthalten, gelöscht und/oder zerstört werden.

7. Verwendung einer Steuereinheit (5) nach einem der Ansprüche 1 bis 6 zur Steuerung eines Kraftfahrzeug-Motors.

## Claims

1. A control unit (1) having a microprocessor, a programmable memory, a housing (2) and at least one data line (3, 4) leading out of the housing (2) for connection with an external device for writing and/or reading data to or from the programmable memory,
whereby the control unit (1) is encapsulated in the housing (2) such that the operability of the control unit (1) is at least partly destroyed when the housing (2) is opened,
**characterized in that**
the control unit (1) has a check device (5) that checks for authorization a write and/or read access by which data are written to the programmable memory or read therefrom over the data line (3, 4) and causes the data to be read from/written to the programmable memory only in case of a successful check of authorization, and the check device (5) contains means for establishing a connection to a third authority and a read/write access is permitted only when it has been released by said third authority.

2. The control unit according to claim 1, **characterized in that** the check device comprises a memory with a secret check word and a comparing device for comparing with said check word for an authorization check a keyword transferred to the control device over a data line before a write access.

3. The control unit according to claim 1 or 2, **characterized in that** the check device comprises means for carrying out a challenge-response method for an authorization check.

4. The control unit according to any of claims 1 to 5 [sic], **characterized in that** the check device comprises means for encryption and/or decryption of data.

5. The control unit according to any of claims 1 to 3, **characterized in that** the check device (5) comprises means for checking a digital signature of the data transferred over the data line (3, 4).

6. The control unit according to any of claims 1 to 5, **characterized in that** the control unit is encapsulated in the housing such that memory areas containing a secret check word and/or secret key and/or secret encryption algorithm are erased and/or destroyed when the housing is opened.

7. Use of a control unit (5) according to any of claims 1 to 6 for controlling an automobile engine.

## Revendications

1. Unité (1) de commande avec un microprocesseur, avec une mémoire programmable, avec un boîtier (2) et avec au moins une ligne (3, 4) de données sortant du boîtier (2) pour liaison avec un équipement externe pour l'écriture et/ou la lecture de données dans ou depuis la mémoire programmable, l'unité (1) de commande étant enfermée dans le boîtier (2) de telle sorte qu'en cas d'ouverture du boîtier (2), la capacité de fonctionnement de l'unité (1) de commande est au moins partiellement détruite,
**caractérisée en ce que** l'unité (1) de commande présente un équipement (5) de contrôle, lequel vérifie un accès à l'écriture et/ou la lecture moyennant quoi des données sont inscrites dans la mémoire programmable ou sont lues depuis celle-ci via la ligne (3, 4) de données, pour ce qui est d'une autorisation et n'admet l'écriture/la lecture des données dans ou depuis la mémoire programmable qu'en cas de vérification réussie et,
**en ce que** l'équipement (5) de contrôle comprend des moyens pour recevoir une liaison vers un tiers service et **en ce qu'**un accès à l'écriture/la lecture n'est permis que si une validation est effectuée par ce tiers service.

2. Unité de commande selon la revendication 1, **caractérisée en ce que** l'équipement de contrôle inclut une mémoire avec un mot de contrôle secret et un équipement de comparaison pour comparer un mot-clé transmis à l'équipement de commande avant un accès à l'écriture via une ligne de données au mot de contrôle pour la vérification de l'autorisation.

3. Unité de commande selon la revendication 1 ou 2, **caractérisée en ce que** l'équipement de contrôle inclut des moyens pour effectuer un procédé de réponse-challenge pour la vérification de l'autorisation.

4. Unité de commande selon l'une des revendications 1 à 5, **caractérisée en ce que** l'équipement de contrôle inclut des moyens pour coder et/ou décoder des données.

5. Unité de commande selon l'une des revendications 1 à 3, **caractérisée en ce que** l'équipement (5) de contrôle inclut des moyens pour vérifier une signature numérique des données transmises via la ligne (3, 4) de données.

6. Unité de commande selon l'une des revendications 1 à 5, **caractérisée en ce que** l'unité de commande est enfermée dans le boîtier de telle sorte qu'en cas d'ouverture du boîtier, des zones de la mémoire, qui contiennent un mot de contrôle secret et/ou un code secret et/ou un algorithme de codage secret, sont effacées et/ou détruites.

7. Utilisation d'une unité (5) de commande selon l'une des revendications 1 à 6 pour commander un moteur de véhicule.
